# EUROPEAN PATENT APPLICATION

(11) **EP 1 564 657 A1**
(43) Date of publication of application: **17.08.2005**
(21) Application number: 04250712.9
(22) Date of filing: 10.02.2004
(51) Int. Cl.: G06F 17/30

(54) **Apparatus and method for data communication and synchronisation**

(71) Applicant: Research In Motion Limited, Waterloo, Ontario N2L 3W8 (CA)
(72) Inventor: Yach, David Paul, Waterloo, Ontario N2K 2N1 (CA); Linkert, Barry Warren, RR2 Petersbury, Ontario, NoB 2HO (CA); Zhu, Jie, Kitchener, Ontario, N2G 4Z7 (CA); Omar, Salim Hayder, Waterloo, Ontario N2T 1Z1 (CA); Tysowski, Piotr K., Waterloo, Ontario N2K 2R2 (CA); Hecht-Enns, Albert, Waterloo, Ontario N2V 2S6 (CA); Phillips, Catherine, Waterloo, Ontario N2T 2S5 (CA); Pereira, Kathy Ann, Waterloo, Ontario N2V 2R7 (CA)
(74) Representative: Hibbert, Juliet Jane Grace

(57) **Abstract**

Apparatus, and an associated method, for placing data that is to be communicated pursuant to a synchronization session into efficient form. The synchronization session operates to synchronize database copies to place the data records of the database copies in match with one another. A coordinator coordinates change entries that are placed into a change listing. The coordination removes redundancies of the change entries so that the change entries that form a change history are maintained in efficient form, thereby to minimize the bandwidth required upon a radio air interface to communicate such information pursuant to a synchronization session.

## Description

The present invention relates generally to a manner by which to synchronize database copies connected by way of a radio air interface. More particularly, the present invention relates to apparatus, and an associated method, by which to place data that is communicated upon the radio air interface pursuant to synchronization operations into a form to facilitate its communication in an efficient manner.

A change list is maintained. The change list indicates changes made to a database copy that is to be synchronized. Entries into the change list are coordinated to minimize the amount of data that needs to be communicated over the radio air interface during the synchronization operations. Coordination of the change list entries removes redundant information. Multiple changes to a database record are combined into a single, resultant change listing. Unchanged portions of data records are removed. And, a change-listing data format is used that avoids the need to communicate nonessential data. By minimizing the amount of data that must be communicated pursuant to a synchronization session, the bandwidth needed to be allocated upon the radio air interface to perform the synchronization operations is correspondingly minimized.

### BACKGROUND OF THE INVENTION

Many aspects of modem society require the availability of communication systems through which to communicate data. A data communication service is a service that is effectuated through the communication of data. Data communicated pursuant to the effectuation of a communication service is originated at a communication source and delivered to a communication target.

The communication system includes, at a minimum, a first communication station to which the data sourced at the communication source is provided and a second communication station, coupled to, or forming, the communication target. The first communication station forms a sending station that sends the data upon a communication channel to the second communication station. The second communication station forms a receiving station.

Two-way communication services are possible when the communication stations are each capable of both sending and receiving data. Such communication stations provide for the transmission of data therefrom as well as for the reception of data that is communicated thereto. Communications are sometimes also defined in terms of the number of communication stations involved in a communication session pursuant to which the communication service is effectuated. Point-to-point communications are effectuated between a pair of communication stations and point-to-multipoint communications are effectuated between a sending station and more than one receiving station.

The introduction of new types of communication systems, as well as improvements to existing communication systems, is made possible as a result of technological advancements. Technological advancements, when implemented in communication systems, generally provide for the communication of data at increased data throughput rates and at increased levels of accuaracy.

A radio communication system is an exemplary type of communication system. In a radio communication system, wireline connections, conventionally required to interconnect communication stations in a conventional, wireline communication system, are obviated. Instead, communication channels are defined upon a radio link formed between the communication stations of the radio communication system. Because the need for a wireline connection is obviated, the implementation of a communication system as a radio communication system provides for various advantages. A significant advantage is to provide for mobility of communications.

Technological advancements that are incorporated into communication systems include, not only advancements in communication technologies, but also advancements in processing technologies. Advancements in processing technologies are also incorporated into new, and improved, communication systems. Generally, technological advancements pertaining to data processing generally permit increasingly large amounts of data to be processed at increasingly quick rates. Modem data processing techniques permit large amounts of data to be stored and processed. Radio communication systems, as well as others, are regularly used by which to transport data that is subsequently processed through the use of data processing techniques. Communication devices, and systems in which the communication devices are used, are available by which to perform various data processing operations and communication services. Additional communication services and associated applications that implement new data processing and new communication technologies shall likely also become available in the future.

Personal digital assistants (PDAs) are exemplary of communication devices that are available by which to perform various data processing operations. Personal digital assistants are popularly utilized by many users. The devices typically are of small dimensions and are packaged in housings that permit hand-carriage of the personal digital assistants by a user.

Personal digital assistants typically contain one or more databases in which the data stored thereat is selectably retrievable at the request of a user of the device. The data stored at the database is typically also formatted into a series of data records. Each data record contains one or more data fields populated with data. Upon selection by the user, the data is retrieved from the database and displayed, or otherwise made available, to the user. The user is able also to initiate processing operations, such as sorting operations, to sort, or otherwise process, the data that is contained at, or otherwise forms, the database. Additionally, the user of the personal digital assistant is also able to change, or add to, the data stored at the databases.

Back-up of the data stored at the personal digital assistant, or other data storage and processing device, facilitates recovery of the data in the event of loss of the data at the device. Data back-up procedures are regularly carried out so that a copy of the data remains available in the event of loss of the data at the data and storage and processing device. Conventional, personal digital assistants, for instance, sometimes provide for back-up of the stored information at the portable device at a computer workstation, or analogous device that contains a storage memory depository at which a copy of the database is stored. Conventional back-up operations between a personal digital assistant and a computer workstation make use of a fixed cable that is positioned to interconnect the devices during the back-up operations. Once the data is backed-up, the back-up copy is available, if subsequently needed.

However, when the data is stored at the more than one location, subsequent updates to, or other changes to, any data of the databases causes the back-up copy no longer to be a complete copy of the database. Any addition, deletion, or other change to any data of the databases causes the back-up copy thereof no longer to be a complete copy of the database. That is to say, asynchronous changes to the database, or its back-up copy, result data content dissimilarities therebetween.

To place the database, and its copy, back into complete conformity with one another, synchronization of the database and its copy is required. Synchronization operations are performed, for instance, during subsequent back-up operations. During the subsequent, back-up operations, the data stored at the respective locations are compared together. Responsive to the comparisons, data found to be out-of-match with one another is identified. Then, overwriting of appropriate data portions is effectuated to place the database and its back-up copy back in complete match with each other.

Other portable devices make use of a radio air interface by which to, amongst other things, back-up, and synchronize, data stored at databases. Data back-up operations and data synchronization operations that are performed by way of a radio air interface are, however, more problematical than operations performed by way of a conventional wireline connection. For instance, bandwidth limitations limit the communication capacity available for allocation for back-up and synchronization operations. The use of conventional manners, predicated upon the availability of wireline connections by which to back-up and synchronize data are, as a general rule, prohibitively bandwidth consumptive when applied to a system in which such operations are performed by way of a radio air interface.

Any manner by which better to provide for the back-up and synchronization of data by way of a radio air interface would therefore be advantageous.

It is light of this background information related to the synchronization of data contents of databases by way of a radio air interface that the significant improvements of the present invention have evolved.

### SUMMARY OF THE INVENTION

The present invention, accordingly, advantageously provides apparatus, and an associated method, by which to synchronize database copies connected by way of a radio air interface.

Through operation of an embodiment of the present invention, a manner is provided by which to place the data that is communicated upon the radio air interface pursuant to synchronization operations into a form to facilitate its communication in an efficient manner.

A change list is associated with the database. The change list is maintained and updated to indicate changes to data stored at the database. Entries in the change list are sent upon the radio air interface pursuant to synchronization operations between the database copies, e.g., the database maintained at the portable device and the copy thereof at a network.

Entries into the change list are coordinated to minimize the amount of data contained therein and, therefore, to minimize the amount of data that must be communicated upon the radio air interface pursuant to the synchronization operations.

In one aspect of the present invention, coordination of the change list entries causes redundant information to be removed or otherwise not entered into the change list. For instance, multiple changes to a database record are combined into a single, resultant change listing. Instead of listing each separate change of the multiple changes, and sending such multiple changes upon the radio air interface, the individual ones of the changes are combined into a single change entry. Two, or more, changes that have the effect of counteracting each other, offset one another, and no entry need be made into the change listing. And, separate changes made to separate portions of the data, such as separate changes to different fields of a data record are combined into a single change, such as a single change listing indicating changes to the separate fields are made. Thereby, separate change listings do not have to be communicated over the radio air interface. Instead, only a single change listing needs to be communicated.
In another aspect of the present invention, portions of a data record, or other data portion in which changes are not made, are not included in a change list entry. Thereby, data that need not be communicated upon the radio air interface is excluded from the change list and, thereby, not subsequently communicated upon the radio air interface during synchronization operations.

In another aspect of the present invention, a change-listing data format is utilized in which to format the entries on the change list. The change-listing data format is a format that obviates the need of null terminated values. That is to say, the entries on the change list are free of null terminated values. By obviating the need for use of such values, each change entry of the change listing is of a shortened length, also facilitating thereby reduced bandwidth requirements upon the radio air interface to perform the synchronization operations. A formatter is utilized for formatting each of the change listings into the change-listing data format. Each entry of the change listing includes a tag length that identifies the length of the entry. Because the tag length identifies the length of the entry, null terminators are not required.

When embodied at a portable device, i.e., a mobile node, coordination is provided by a synchronization (sync) agent. The sync agent coordinates the entries on the change listing to place such entries in efficient form for their subsequent communication upon the radio air interface to a network-based synchronization server pursuant to a synchronization session. Coordination provided by the sync agent optimizes the change listing entries in a manner to minimize the amount of data contained therein. Redundancies of the data contained in the change listings is reduced, thereby to reduce the amount of data that is communicated upon a radio air interface pursuant to the synchronization operations.

In these and other aspects, therefore, apparatus, and an associated method, is provided for a radio communication system. The radio communication system has a network part at which a network-copy database is maintained. And, the radio communication system has a mobile node at which a mobile-copy database is maintained. Placement of data stored at a selected one of the network-copy database and the mobile-copy database into a form to facilitate efficient communication thereof pursuant to a synchronization session is provided. A change list is maintained at least at a selected one of the network part and the mobile node. The change list is associated with a corresponding selected one of the network-copy database and the mobile-copy database. The change list contains a history of changes made to the corresponding selected one of the network-copy database and the mobile-copy database. A change-list coordinator is adapted to received changes made to the corresponding one of the network-copy database and the mobile-copy database. The change-list coordinator coordinates the history of changes that is contained in the change list such that the history of changes includes non-redundant change listings.

A more complete appreciation of the present invention and the scope thereof can be obtained from the accompanying drawings that are briefly summarized below, the following detailed description of the presently-preferred embodiments of the invention, and the appended claims.

### BRIEF DESCRIPTION OF THE DRAWINGS

Figure 1 illustrates a functional block diagram of a radio communication system in which an embodiment of the present invention is operable.
Figure 2 illustrates a partial process, partial message sequence diagram showing operation of an embodiment of the present invention.
Figure 3 illustrates a method flow diagram listing the method steps of the method of operation of an embodiment of the present invention.

### DETAILED DESCRIPTION

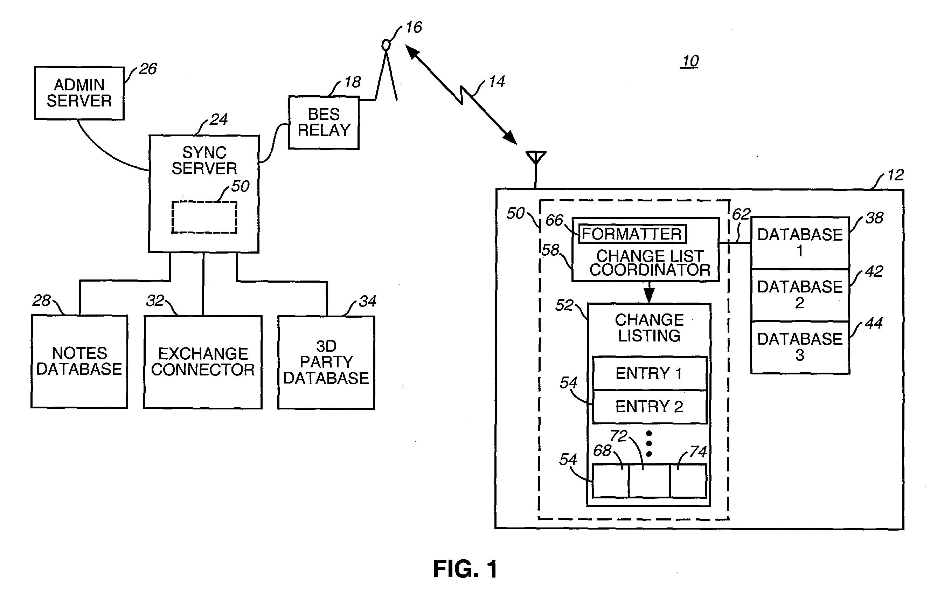

Referring first to Figure 1, a radio communication system, shown generally at 10, provides for radio communications, by way of a radio air interface, between a mobile node and a fixed network part of the communication system. Here, for purposes of illustration, a single mobile node 12 is shown.

Data is communicated during operation of the radio communication system between the mobile node and the network part to effectuate any of various communication services. Two-way communication of data is provided in the communication system 10. Data sourced at the mobile node is communicated by way of an up-link channel defined upon a radio up-link of the radio air interface. And, data originated at the network part of the communication system is communicated to the mobile node by way of a down-link channel defined upon a radio down-link of the radio air interface. The arrow 14 represents the radio air interface and the radio up-link and radio down-link thereof.

The network part of the communication system includes a base transceiver station 16. The base transceiver station defines a coverage area, sometimes referred to as a cell. When the mobile node 12 is positioned at a location encompassed by the cell defined by the base transceiver station, the mobile node is generally capable of communicating, by way of the radio air interface, with the base transceiver station. The mobile node, permitted mobility, is repositionable to be located subsequently in a coverage area encompassed by another base transceiver station. Upon such subsequent movement, the mobile node is capable of communication with the base transceiver station in whose coverage area the mobile node is subsequently positioned.

A relay device 18 is coupled to the base transceiver station 16. The relay device here forms a BES relay. And, in turn, the relay device is coupled to a synchronization server 24. The relay device and the synchronization server are functionally represented, here as separate functional entities. In one exemplary implementation, the functions performed by the separate entities are carried out upon a common device or platform.

The network part of the communication system also includes an administration (Admin) server 26. The administration server is coupled to the synchronization server. And, the administration server provides administration services to the communication system. The administration services include, for instance, administrative control over operation of the synchronization server.

Network-based databases are embodied at, or are functionally coupled to, the synchronization server. Exemplary databases are shown in the Figure. Here, a first database 28, a Lotus™ Notes database, is coupled to the synchronization server. A second database 32, an Exchange™ connector for an Exchange-based database is also functionally coupled to the synhronization server. And, a third database 34 is also functionally coupled to the synchronization server. The third database here forms a third-party database. The three exemplary databases are text-formatted, here utilizing an Extensible Mark-Up Language (XML) format. In the exemplary implementation, the databases 28, 32, and 34 are each formed of a plurality of data records. And, each data record is formed of one or more data fields. The data fields of the data records are selectably populated with data values. And, selected ones of the data-record fields form key fields.

Databases are also embodied at the mobile node 12. And, more particularly, the databases 28, 32, and 34 are copies of the databases embodied at the mobile node. Here, a first database 38 embodied at the mobile node is associated with the database 28. That is to say, the database 38 forms a Lotus™ Notes database, and the database 28 is a copy thereof. And, a second database 42, here an Exchange-based database is associated with the database 32. The database 32 is a copy of the database 42. And, the mobile node includes a third database 44. The database 44 is a third-party database, and is associated with the database 34 embodied at the network part. The database 34 is a copy of the database 44.

As the databases embodied at the network part and the mobile node are asynchronously updateable, the copies of the respective databases might fall out of match with one of another in the event of asynchronous updates to one or the other of the databases of the database pairs. To place the databases of the database pairs back in match with one another, synchronization procedures are performed. Pursuant to a synchronization procedure, values of corresponding data stored in the respective databases are compared. And, if the comparisons indicate the data to be out of match with one another, the data at one, or the other, of the databases is updated. Thereby, the databases are brought into match with one another.

As noted previously, communication resources available upon the radio air interface are limited. When communication resources are allocated for the communication of synchronization data, the communication resources available for other communications is adversely affected. Operation of an embodiment of the present invention permits the amount of data that is communicated upon the radio air interface pursuant to a synchronization procedure, thereby to permit more efficient utilization of the radio air interface and the limited communication capacity thereon.

The mobile node includes apparatus, shown 50, of an embodiment of the present invention. The apparatus 50 places the data that is communicated upon the radio air interface pursuant to a synchronization session between the mobile node and the sync server, or other network part, in efficient form, free of redundancies, thereby to minimize the amount of data that is communicated pursuant to the synchronization session. The apparatus 50 includes a change listing 52. The change listing includes a series of entries 54. The entries 54 are each representative of changes made to a data record of a database. Here, for purposes of illustration, the change listing 52 is associated with the database 38, and the entries thereof are representative of changes made to the data records of the database 38. Other change listings are associated with others of the databases embodied at the mobile node. And, while not separately illustrated, corresponding apparatus, in one implementation, is also embodied at the synchronization server, here also shown at 50.

The apparatus also includes a change-list coordinator 58. The change-list coordinator coordinates the entries made to the change listing 52. Here, coordinator is coupled, indicated by way of the line 62, to receive indications of changes made to the database, here the database 38. The coordinator coordinates the entries 54 contained in the change listing so that the entries are free of redundancies and in efficient form. The change entries are communicated upon the radio air interface during a synchronization session. By placing the change entries in efficient form, free of redundancies, the information communicated upon the radio air interface is minimized.

The coordinator modifies change entries associated with a particular data record when a subsequent change is made to the same data record. Multiple changes to a data record are combined such that a resultant change entry is formed. The resultant change entry indicates the resultant changes to a data record subsequent to multiple changes thereto. If, for instance, a subsequent change to a data record counteracts a prior change to the data record, no change entry is required as the second change offsets the first change. If an entry has previously been entered into the change listing and the subsequent change to the database counteracts the earlier-noted change, the change entry can be deleted from the change listing.

The coordinator additionally indicates changes to separate fields of a single data record in a single entry 54. That is to say, if separate changes are made to separate data fields of a single data record, such changes are indicated in a single entry. Thereby, multiple entries associated with a single data record are avoided. And, portions of a data record that do not include changes are removed, or otherwise are not included in the change entry.

The coordinator includes, as a functional portion thereof, a formatter 66. The formatter 66 operates to format the change entries contained in the change listing 52. The formatter operates to format the change entries according to a tag length encoding format. An exemplary change entry 54 indicates the formatted entry to include a tag length value 68, a command value 72, and data value 74. The value of the tag length indicates the length of the change entry. Null teminators are not required, and the change entries are permitted to be of variable lengths. When an entry, formatted by the formatter 66 into the tag length format is communicated pursuant to a synchronization session, the station that receives the values of the entry, here, e.g., the synchronization server, the length of the entry is determinable by evaluation of the value populated in the tag length portion of the entry. The need otherwise to utilize null terminators to indicate the end of an entry is obviated.

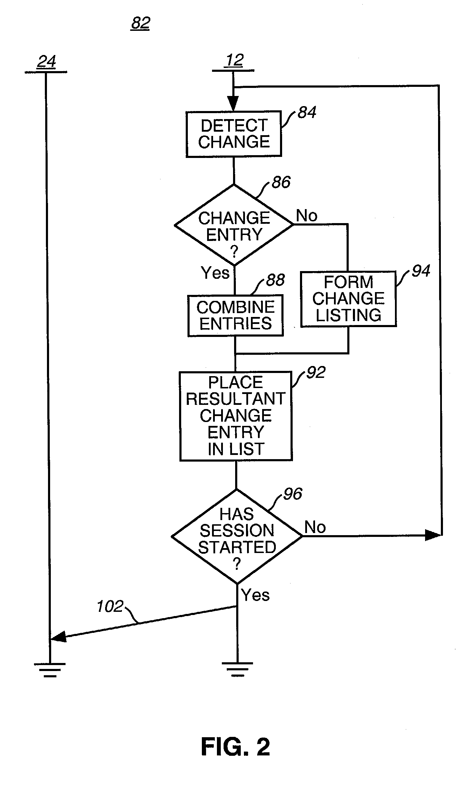

Figure 2 illustrates a message sequence diagram, shown generally at 82, representative of operation of the communication system 10, shown in Figure 1, to place the entries contained in a change listing into optimal form to facilitate minimization of the data required to communicated upon the radio air interface pursuant to a synchronization session. First, and as indicated by the block 84, detection is made of a change to any of the data records of a database, here, e.g., the database 38. Then, as indicated by the decision block 86, a determination is made whether a change entry is already contained in the change listing associated with the database. If a change listing already exists for the database entry, the yes branch is taken to the block 88. And, as indicated at the block 88, the changes to the data record are combined. And, as indicated by the block 92, a resultant change entry is place in the change listing. If the additional change to the data record is a change to a separate data field, the cumulative changes are combined and the change entry indicates the resultant changes to the data field. If the multiple changes counteract one another, no change entry is required.

If the determination made at the decision block 86 is that a pre-existing change entry is not already contained in the change listing, the no branch is taken to the block 94, and a change listing is formed. And, then, a branch is taken to the block 92, and the newly-created change entry is placed into the change listing.

A determination is then made, as indicated by the decision block 96, as to whether a synchronization session has been initiated. If not, the no branch is taken back to the block 84, thereby to continue monitoring changes to the database. If, however, a synchronization session is initiated, the yes branch is taken. A synchronization session is initiated either by the mobile node or by the network part of the communication system. Entries contained in the change listing are selectably retrieved and communicated, as indicated by the segment 102, to the synchronization server of the network part. Subsequent synchronization operations determine whether the databases are in match with each other.

Because the entries contained in the change listing are formatted into tag-length, encoded format, and because redundancies in the information are removed, the communication resources that need to be allocated upon the radio air interface to communicate the change history information pursuant to a synchronization session is minimized. Efficient usage of the limited resources available to the communication system upon the radio air interface are efficiently utilized.

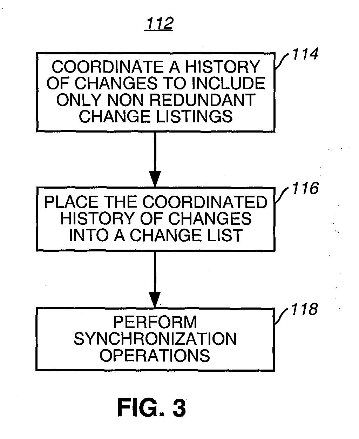

Figure 3 illustrates a method flow diagram, shown generally at 112, listing the method steps of the method of operation an embodiment of the present invention. The method facilitates placement of data stored at a selected one of a network-copy database and a mobile-copy database into a form to facilitate its efficient communication pursuant to a synchronization session.

First, and as indicated by the block 114, a history of changes indicative of changes to the selected one of the network-copy database and the mobile-copy database are coordinated. Pursuant to the coordination, the history of changes includes only non-redundant change listings. And, as indicated by the block 116, the coordinated history of changes are placed into a change list maintained at a corresponding one of the network part and the mobile node that corresponds to the network-copy database and the mobile-copy database of which the history of changes is indicative. Then, and as indicated by the block 118, synchronization operations are performed.

By coordinating the changes that are placed in the change listing, the change entries are placed in efficient form, thereby to minimize the amount of data that must be communicated upon the radio air interface pursuant to a synchronization session.

The previous descriptions are of preferred examples for implementing the invention, and the scope of the invention should not necessarily be limited by this description. The scope of the present invention is defined by the following claims:

## Claims

1. In a radio communication system having a network part at which a network-copy database is maintained and a mobile node at which a mobile-copy database is maintained, an improvement of apparatus for facilitating placement of data stored at a selected one of the network-copy database and mobile-copy database into a form to facilitate efficient communication thereof pursuant to a synchronization session, said apparatus comprising:
a change list maintained at least at a selected one of the network part and the mobile node and associated with a corresponding selected one of the network-copy database and the mobile-copy database, said change list containing a history of changes made to the corresponding selected one of the network-copy database and the mobile-copy database;
a change-list coordinator adapted to receive indications of changes made to the corresponding selected one of the network-copy database and the mobile-copy database, said change-list coordinator for coordinating the history of changes contained in said change list such that the history of changes includes non-redundant change listings.

2. The apparatus of claim 1 wherein data maintained at the network-copy database and at the mobile-copy database is formatted into data records, each data record formed of at least one data field, and wherein said change list coordinator coordinates the history of changes such that, for any data record, the change listings note changes, if any, to the at least one data field of the data records and exclude data fields of the data records that are absent changes.

3. The apparatus of claim 2 wherein said change list coordinator coordinates the history of changes such that the change listings note, for each data record containing a change, a single resultant data record, in which changes, if any, are cumulated and the single-resultant data record is formed as a result thereof.

4. The apparatus of claim 3 wherein the changes to at least one data record comprise a first change to a selected data field thereof and a second change to the selected data field, and wherein the single resultant data record is formed of a cumulated result of the first change and the at least the second change.

5. The apparatus of claim 4 wherein the second change negates the first change and wherein said change-list coordinator further coordinates the history of changes contained in said change list to prevent inclusion in the change list to prevent inclusion in the change list of changes that negate one another.

6. The apparatus of claim 3 wherein the changes to at least one data record comprise a first change to a first selected data field thereof and a second change to a second selected data field thereof, and wherein the single resultant data record is formed of the first selected data field and the second selected data field.

7. The apparatus of claim 6 wherein the single resultant data record comprises solely the first selected data field and the second selected data field.

8. The apparatus of claim 1 wherein the history of changes contained in said change list and coordinated by said change list coordinator are formatted to be free of null terminated values.

9. The apparatus of claim 1 wherein said change list coordinator further comprises a formatter, said formatter for formatting each change listing of the history of changes contained in said change list to be of a selected format.

10. The apparatus of claim 9 wherein the selected format by which the formatter of said change list coordinator formats each change listing includes a tag length encoding format.

11. The apparatus of claim 10 wherein each change listing is of at least a first selected change-type of a set of change-types, the change-type defining a tag, the tag contained in the change listing when formatted pursuant to the tag length encoding format.

12. The apparatus of claim 10 wherein each change listing is of a selected listing length, the history when formatted pursuant to the tag length encoding format.

13. The apparatus of claim 10 wherein said change listing is free of terminator values separating separate ones of the change listings thereof.

14. The apparatus of claim 1 wherein said change listing is of a selected maximum size.

15. In a method of communicating in a radio communication system having a network part at which a network copy database is maintained and a mobile node at which a mobile copy database is maintained, an improvement of a method for facilitating placement of data stored at a selected one of the network copy database and mobile copy database into a form to facilitate efficient communication thereof pursuant to a synchronization session, said method comprising:
coordinating a history of changes indicative of changes to a selected one of the network copy database and the mobile copy database such that the history of changes includes only non-redundant change listings; and
placing the history of changes coordinated during said operation of coordinating into a change list maintained at a corresponding one of the network part and the mobile node, corresponding to the network copy database and the mobile copy database of which the history of changes is indicative.

16. The method of claim 15 wherein data maintained at the network copy database and at the mobile copy database is formatted into data records, each data record formed of at least one data field, and wherein coordination performed during said operation of coordinating comprises coordinating the history of changes such that, for any data record, the change listings note changes, if any, to the at least one data field of the data records and exclude data fields of the data records that are absent changes.

17. The method of claim 16 wherein coordination performed during said operation of coordinating comprises coordinating the history of changes such that, for any data record, the change listings note changes, if any, to the at least one data field of the data records that are absent changes.

18. The method of claim 17 wherein the changes to at least one data record comprises a first change to a selected data field thereof and a second change to the selected data field and wherein the single resultant data record is formed of a cumulated result of the first change and the at least the second change.

19. The method of claim 18 wherein the second change negates the first change and wherein coordination performed during said operation of coordinating further prevents inclusion in the change list changes the negate one another.

20. The method of claim 15 wherein said operation of coordinating further comprises formatting each change listing into a selected format.
